# EUROPÄISCHE PATENTSCHRIFT

(11) **EP 0 625 962 B1**
(45) Veröffentlichungstag und Bekanntmachung des Hinweises auf die Patenterteilung: **13.03.1996**
(21) Anmeldenummer: 93903150.6
(22) Anmeldetag: 06.02.1993
(51) Int. Cl.: C04B 20/04, C04B 28/02

(54) **VERFAHREN UND ANLAGE ZUR HERSTELLUNG EIGENSCHAFTSMODIFIZIERTER WERKSTOFFE**
PROCESS AND INSTALLATION FOR PRODUCING MATERIALS WITH MODIFIED PROPERTIES
PROCEDE ET INSTALLATION POUR FABRIQUER DES MATERIAUX AUX PROPRIETES MODIFIEES

(30) Priorität: 11.02.1992 DE 4203866; 03.06.1992 DE 4218216; 24.08.1992 DE 4227996
(43) Veröffentlichungstag der Anmeldung: 30.11.1994
(73) Patentinhaber: ENVIRONMENTAL TECHNOLOGIES (EUROPA) LTD., Westcliff on Sea (GB)
(72) Erfinder: FUCHS, Helmut, D-9153 Neuwürschnitz (DE); KNAUPE, Werner, D-7024 Leipzig (DE); MARKERT, Frieder, D-9305 Crottendorf (DE)
(74) Vertreter: Heyner, Klaus, Dr.-Ing.
(86) Internationale Anmeldenummer: DE9300102
(87) Internationale Veröffentlichungsnummer: WO9316009

(56) Entgegenhaltungen:
- WO-A-92/10534
- AT-A- 394 186
- DD-A- 201 114
- DE-A- 3 508 552
- DE-U- 9 017 717
- KUNSTSTOFFE Bd. 81, Nr. 8, August 1991, MUNCHEN DE Seiten 682 - 686 , XP287707 V.HESS 'Metallpartikel und Staub abtrennen'
- PATENT ABSTRACTS OF JAPAN vol. 7, no. 133 (M-221)(1278) 10. Juni 1983
- H. Fuchs, Techn. Textilien 33 (1990), 5/6, 161ff.

## Beschreibung

Die Erfindung bezieht sich auf ein Verfahren bzw. eine Anlage zur Herstellung von Werkstoffen für wärme-, schall-, schwingungs- und strahlungsdämpfende mineralisch gebundene Bauglieder mit nichtsprödbrüchigem Verhalten bei Druck-und Biegebeanspruchung in der Form von Leichtbetontußböden, Dämmplatten, Pflanzlochplatten, Hohlblocksteinen, Leichtbetonplatten zum Ausfachen von Skelettbauwerken, von stoßbelasteten Zwischenschichten in Autobahn- und Gleisbaukörpern, von Schutzschichten für Geotextilien oder Dichtungsfolien im Erdbau und von Schüttungen mit wärme-, schall-, schwingungs- und/oder kernstrahlungsdämpfenden Anforderungen.

Dieser eigenschaftsmodifizierte Werkstoff enthält als Trägermaterial einen erheblichen Anteil an zerkleinerten unsortierten Materialien und zerkleinerten verschlissenen Erzeugnissen bzw. Reststoffen der Textil-, Leder- und Kunstlederindustrie. Diesem Werkstoff können je nach Verwendungszweck mineralisch gebundene Anteile in Form von Staub, Asche und/oder Schlamm sowie biologisch-toxische Stoffe zugemischt werden, die jedoch im erzeugten Werkstoff einer Behandlung zur Inertisierung zu unterziehen sind.

Das Verfahren ist besonders umweltfreundlich durch die Nutzbarwachung von Rest- und Abfallstoffen sowie verschliessener Erzeugnisse der Textil-, Leder- und Kunstlederindustrie, insbesondere auch durch die Verarbeitung nichtmetallischer Bestandteile aus dem Autorecycling sowie Staub, Asche und Schlamm aus Entsorgungsprozessen.

Das Verfahren gestattet auch die Verwertung von gesetzlich rücknahmepflichtigem Leergut aus Papier, Pappe, Plaste und Schichtstoffen der Handelsunternehmungen.

Umweltfreundlich wirkt dieses Verfahren weiterhin durch die Einsparung von Naturressourcen wie Sand, Kies und Splitt sowie durch die Reduzierung der Einsatzmengen an mineralischen Bindemitteln und Abbindebeschleunigern.

Die bekannten technischen Lösungen zur Verwertung von zerkleinerten nichtmetallischen Industrie- und Siedlungsabfällen als Füll- bzw. Werkstoffe verwenden als Ausgangsmaterial beispielsweise 40 bis 60 Massenprozent an Textilfasern, Bindemittel auf Kunstharzbasis z.B. für die Herstellung von Kunststeinen (WO 89/11457), für Isoliermaterial aus Melaminharz-Fasermatten (DE 3147308) oder Dämmplatten aus Harnstoff-Formaldehyd-Harz (DD 235291). Andere Verfahren erzielen die Einbindung von zerkleinerten Faserstoffen durch Verklebung mittels Zusätzen von thermoplastischen Fasern und der Einwirkung von Wärme und Druck (DD 209772, DD 259819) oder Verklebungen der Fasern mittels Zusätzen von Leimen und Reaktionshilfen (DE 3641464).

Solche Verfahren und die zugehörigen Produktionsanlagen haben einen hohen Energiebedarf und sind sehr kostenaufwendig. Sie stellen damit keine wirtschaftliche Alternative dar zur Verarbeitung der anfallenden großen Massen an organischen Füll- bzw. Werkstoffen.

Zur Eigenschaftsverbesserung zellulosefaserverstärkter anorganischer Formkörper sind zur Nachbehandlung auch Anlagen zur Dampfhärtung bekannt (DE 3734729). Thermische Nachbehandlungen werden ebenso für die Herstellung von Leichtbauzuschlagstoffen aus feinzerkleinertem Müll verwendet, wobei durch Sinterung in einem Brennvorgang Zellstrukturen durch Zersetzung organischer Bestandteile in Sinterpellets mit geschlossener Außenhaut entstehen (DE 3404750) oder bei denen die Umwandlung fester Abfälle mit wenigstens 30 Gewichtsprozent an Zellstoffgehalt, beispielsweise Hausmüll, in Gegenwart von Ätzkalk bei plötzlichem Temperaturanstieg von weniger als 100°C auf eine Temperatur von wenigstens gleich 250°C in feste, inerte und wasserunlösliche Stoffe erfolgt (DD 247891). Mit Temperaturen über 1200°C werden auch gebrannte Füllstoffe aus Blähton hergestellt.

Diese aufgezeigten Verfahren zur Herstellung von vorbehandelten Füllstoffen sind mit hohem technologischen und technischen Aufwand verbunden, der eine solche Abfallverwertung für die in Industriebetrieben und Haushalten anfallenden organischen Stoffe unrentabel macht.

Andere Verfahren nutzen für die Einbindung von Faserstoffen eine mechanische Verankerung in der Grundmatrix des Betons beispielsweise durch Fibrillieren der Fasern (EP 0152490), durch Aufrauhen der Faseroberflächen (EP 0343180) oder mittels Wülsten und Verdickungen an den Faseroberflächen (DE 2930939). Hierzu gehören auch die Herstellungsverfahren mit den zugehörigen Anlagen für Faserverbundmaterialien, bei denen Matten aus Stapelglasseide (DE 3916815) oder strangförmige vorbehandelte Textilien (DE 3508552) formschlüssig haftend in Beton eingebracht werden. Ähnlich wirken Verfahren zur Herstellung gewebebewehrter Zementstrukturen (EP 0135374) und die textile Armierung von Mörtel mit weitmaschigem Gewebe oder Gewirke (DE 3238993).

Zur Verbesserung bauphysikalischer Eigenschaften, insbesondere der Wärmedämmung, der Schall- und der Schwingungsdämpfung, dienen Verfahren plus Anlagen zum Einbringen von speziellen Füllstoffen z.B. in das Baumaterial für Wärmedämmung (EP 0139791) oder der Einsatz von zerkleinertem Textilmaterial im Wärmedämmputz unter Verwendung von schaumfördernden Netzmitteln (DD 236300), Pulver oder Granulat von thermoplastischen Kunststoffen als Füllstoff in Anteilen bis 60 % (EP 0242334) oder von Altreifenabfällen bis zu 95 Gewichtsprozent zur Verbesserung der Wärmeisolation in Baukonstruktionen (DE 2929925).

Die bekannten Lösungen haben gemeinsam den Nachteil, daß sie entweder nur für spezifische Füll- bzw. Werkstoffe oder nur für spezielle Baukonstruktionen anwendbar sind und daß die wirtschaftlichen Parameter für die Herstellung bzw. Verarbeitung großer Mengen, falls sie aufgrund der Spezifik der Baukonstruktion bzw. Füllstoffe überhaupt gebraucht werden, oft unbefriedigend sind.

Die zur Herstellung der Erzeugnisse des Standes der Technik eingesetzten Anlagen sind naturgemäß aufgrund der prinzipiellen Unterschiede im Verfahrensablauf auf die jeweils spezifischen Verfahrensparameter zugeschnitten. Sie sind nicht auf die technische Umsetzung des neuen Verfahrens zur Herstellung eigenschaftsmodifizierter Füll- bzw. Werkstoffe übertragbar.

Diese Mängel sollen dadurch beseitigt werden, daß ein universell einsetzbarer Werkstoff entwickelt und hergestellt wird, der höchste Volumenanteile von zerkleinerten, gemischten und unsortierten Materialien oder verschlissenen Erzeugnissen der Textil-, Leder- und Kunstlederindustrie ohne chemische Zusätze enthält, also nur Stoffe, die als Bindemittel und Abbindebeschleuniger ohnehin im technologischen Prozeß der Herstellung mineralisch gebundener Bauglieder eingesetzt werden. Neben Materialschnitzel sollen noch Stäube und Schlämme aus Entsorgungsanlagen in die Zuschlagstoffe eingearbeitet werden können.

Der Erfindung liegt damit die Aufgabe zugrunde, die in Recyclingprozessen anfallenden bisher nicht verwertbareii nichtmetallischen Materialien sowie unsortierte und gemischte Materialien oder verschlissene Erzeugnisse bzw. Reststoffe der Textil-, Leder- und Kunstlederindustrie in zerkleinerter Form mit mineralischen Bindemitteln zu Werkstoffen, insbesondere Leichtzuschlagstoffen, mit nichtsprödbrüchigem Verhalten unter mechanischen Belastungen und den Verwendungszwecken entsprechend modifizierbaren wärme-, schall-, schwingungs- und/oder strahlungsdämpfenden Eigenschaften zu verarbeiten.

Darüberhinaus ist es Aufgabe der Erfindung, eine Produktionsanlage zu konzipieren, mit der ausgehend von insbesondere verarbeiteten Materialien bzw. Recyclingprodukten der Textil-, Leder- und Kunstlederindustrie, von nichtmetallischen Altautowertstoffen und Verpackungsmittelabfällen kostengünstig mineralisch gebundenen Baustoffe bzw. Bauglieder mit modifizierter bauphysikalischen Eigenschaften herstellbar sind.

In einer weiteren Form der Anwendung der Erfindung soll es möglich sein, eine gasdurchtrittshemmende Abdeckung herzustellen, die im Belastungsfall nicht zerstört wird und ebenso wechselnden Beanspruchungen standhält.

Eine erfindungsgemäße Lösung dieser Aufgabe ist in den Patentansprüchen 1, 8,9 und 15 angegeben. Weiterbildungen der Erfindung sind in den Unteransprüchen gekennzeichnet.

Das Wesen der Erfindung besteht darin, daß die zu Füllstoffen für mineralisch gebundene Bauglieder zerkleinerten hochpolymeren Materialien einer schockartigen Wärmeeinstrahlung ausgesetzt werden, um sie zu inertisieren und zu aktivieren, bevor sie mit kristallbildenden wäßrigen Lösungen von mineralischen Abbindebeschleunigern und mineralischen Bindemitteln gemischt werden.

Die erfindungsgemäßen Merkmale für die Wärmebehandlung sind die extrem hohe Farbtemperatur von ca. 2800 K des den Wärmestrom erzeugenden Strahlers und die hohe Energiekonzentration in einer Brennlinie, die zu hohen Temperaturgradienten von mindestens 20 K je mm Durchlauf länge vor und nach der Brennlinie führen.

Die hohe Energiekonzentration in der einstellbaren Brennlinie hat weiterhin zur Folge, daß
- sich in der Brennlinie maximale Farbtemperaturen von über 600° C messen lassen und
- die bestrahlten Materialien mit einer molaren Energie
der Wärmestrahlung im Bereich von 60 bis 170 kJ*mol⁻¹ thermisch aktiviert werden, so daß sich beim Einbringen dieser keimfrei gemachten und so gleichzeitig aktivierten Materialien in wäßrige Lösungen von mineralischen Abbindebeschleunigern und Bindemitteln auf den Oberflächen verteilte festhaftende Kristallkomplexe anlagern.

Als einzusetzende Abbindebeschleuniger eignen sich vorzugsweise Wasserglas oder lösliche Siliziumfluoride zur gleichzeitigen flammwidrigen und witterungsbeständigen Ausrüstung der damit behandelten Materialien in Verbindung mit Zement, Gips oder anderen keramischen Stoffen als Bindemittel.

Die Verteilungsdichte der - auf den Oberflächen der so behandelten Materialien - festhaftenden Kristallkomplexe läßt sich durch die mit der Durchlaufgeschwindigkeit und der Schichtdicke des Materials zu regelnde Dosis der aufgebrach-ten Aktivierungsenergie und die Konzentration der in wäßriger Lösung befindlichen mineralischen Abbindebeschleuniger beeinflussen, wobei der Wassergehalt dem Anmachwasserbedarf des Bindemittels entsprechen kann.

Die nichtsprödbrüchigen, wärme-, schall- und schwingungsdämpfenden Eigenschaften entstehen dadurch, daß die Bindemittel die zerkleinerten Materialschnitzel nicht vollständig umschließen, sondern sich zwischen benachbarten Materialschnitzeln mit partiell verteilten, festhaftenden Kristallkomplexen Brücken aus dem Bindemittelgel, z.B. Zementleim, ausbilden und diese bei dessen Erhärtung die Materialschnitzel fest verkitten. Das verbleibende elastische Verhalten der hochpolymeren Materialvolumina zwischen den Kristallhaftpunkten verleiht dem so entstehenden mineralisch gebundenen Werkstoff die gewünschten bauphysikalischen Eigenschaften.

Die Beimischung von strahlenenergieabsorbierenden Materialien wie inerte Blei- und Borverbindungen, Aluminiumhydroxid, Gadoliniumoxid oder Magnetit in die wäßrige Lösung der Abbindebeschleuniger bewirkt bei dem so hergestellten mineralisch gebundenen Werkstoff Strahlenschutzeigenschaften, insbesondere auch für sekundäre Gamma- und Neutronenstrahlung. Es handelt sich hierbei um eine unlösliche Einbindung der o.g. beigemischten Materialien.

In wäßrigen Mischungen mit den einzusetzenden Abbindebeschleunigern lassen sich auch Schlämme, z.B. aus Abwasseraufbereitungsanlagen, in den Werkstoff einbringen, wobei der Wassergehalt der Schlämme dem Anmachwasserbedarf der Bindemittel angepaßt sein muß.

Wenn die beigemischten Schlämme aus Abwasseraufbereitungsanlagen biologisch-toxische Bestandteile enthalten, dann ist die Inertisierung der lufttrockenen lockeren mineralisch gebundenen Werkstoffe mit einer nochmaligen Wärmebehandlung wie eingangs bei der Behandlung der Materialschnitzel vorzunehmen.

Die formbare Werkstoffmischung läßt sich anschließend in herkömmlichen Formanlagen verdichtet zu mineralisch gebundenen Baugliedern wie Pflanzlochplatten. Dämmplatten, Hohlblocksteine oder Wandleichtbauelemente verarbeiten. Durch eine Lufttrocknung ergibt die nur locker gelagerte Masse ein Schüttgut zur Verwendung als eigenschaftsmodifizierter mineralisch gebundener Werkstoff beispielsweise in Ortbeton, Fußbodenmörtel oder als Leichtzuschlagstoff anstelle von Sand, Kies und Splitt in beliebigen mineralisch gebundenen Baugliedern.

Die Eigenschaftsmodifizierung der Verfahrensprodukte erfolgt einmal mittels Einstellung der Mischungskomponenten und der Relation dieser Komponenten zueinander. Als Komponenten werden insbesondere eingesetzt
- zerkleinerte unsortierte Materialien aus dem Recycling-Rücklauf von Verpackungsmaterial jeder Art
- zerkleinerte, verschlissene Erzeugnisse bzw. Reststoffe der Textil-, Leder- und Kunstlederindustrie
- zerkleinerte Plastmaterialien aus dem Autorecycling
- Stäube, Asche und/oder Schlämme
- biologisch toxische Stoffe.

Zum anderen wird die Eigenschaftsmodifizierung über den Mineralisierungsvorgang selbst durchgeführt:
- in Abhängigkeit von den eingesetzten Mineralien und mineralischen Beimischungen, z.B.
   . schwer entflammbar durch Wasserglas
   . Witterungsbeständig durch Fluorsilikat
- das Festigkeits- und Elastizitätsverhalten ist abhängig von Energiedosis und Dichte des Kristallbelages
- Strahlungsschutzwirkung durch mineralische Zusätze
- Wärmedämmung, Schalldämpfung ist durch Verdichtung (technologische Maßnahme) beeinflußbar
- Resistenz gegen aggressive Chemikalien, z.B. Alkalischäden; festhaftende Kristalle auf der Oberfläche der mineralisierten Materialien können nicht durch Intensivwäsche gelöst werden
- die Verbindung der Mischungskomponenten erfolgt durch mineralische Bindung mit Zement über diese festhaftenden Kristalle; das Festigkeits- und Elastizitätsverhalten kann so beeinflußt werden.

Die erfindungsgemäße Anlage zur Herstellung von eigenschaftsmodifizierten Werkstoffen für mineralisch gebundene Bauglieder nach Anspruch 9 besteht aus einer Kombination von bekannten, handelsüblichen Maschinen und Einrichtungen mit speziellen, erfindungsgemäß konzipierten und eingesetzten Einrichtungen, mit denen die technologischen Bedingungen für das Herstellungsverfahren erfüllt werden. Dazu werden in der technologisch bedingten Reihenfolge nachfolgende Anlagenteile für einen kontinuierlichen Verarbeitungsprozeß hintereinander angeordnet.

Das ist am Anlageninput die Materialzuführungseinrichtung. Hier werden Reststoffe bzw. Recyclingprodukte getrennt nach hartteilbehafteten und hartteilfreien Massen eingegeben. Diese Einrichtung besteht beispielsweise aus einem Förderband, das mit einem Greifer beschickt wird.

Die eingegebenen Massen werden einer Zerkleinerungseinrichtung zugeführt, in der vorzugsweise mittels Shredder die hartteilbehafteten und hartteilfreien Materialien seperat zerkleinert werden. Dabei wird eine Ausführung bevorzugt, bei der der Shredder für die hartteilbehafteten Materialien nach dem Scherprinzip und der Shredder für die hartteilfreien Materialien nach dem schnellaufenden Schlagprinzip arbeitet.

Der Zerkleinerungseinrichtung nachgeschaltet ist die Entstaubungseinrichtung mit dem Staubabscheider zur Ableitung der staubbeladenen Abluft. Der Abscheidekanal selbst besitzt mehrfache Wasservorhänge, die vom staubbehafteten Luftstrom durchströmt werden. Uber diesen Staubabscheider ist auch eine Staubzuführung in den Verarbeitungsprozeß der Anlage möglich. Derart zugeführte Stäube können u.a. Scherstaub, Industriestaub bzw. Asche sein.

Wesentliches Merkmal der Anlage ist es dabei, daß aus dem zugeführten Material abgeschiedener Staub und extern über den Staubabscheider zugeführter Staub in ausgeschlämmter Form in den Verarbeitungsprozeß der Anlage, im Rahmen der Mineralisierungseinrichtung bzw. des Mischers zurückgeführt werden können.

Der Entstaubungseinrichtung ist ein Dosierer nachgeordnet. Der Dosierer besteht erstens aus einer Zellradschleuse, der die Materialschnitzel aus der Entstaubungseinrichtung im freien Fall zugeführt werden und die mittels des drehzahlregelbaren Austragsrades der Zellradschleuse eine Dosierung, d.h. Beschickung des sich unter der Zellradschleuse befindlichen Förderbandes gewährleistet.

Der Dosierer besteht zweitens aus vorzugsweise je einer Ausbreitewalze und einer Abstreifewalze, die mit ihren Achsen vorzugsweise senkrecht zum Förderband angeordnet sind und gegenläufig zur Bewegungsrichtung des Förderbandes angetrieben werden. Durch die gegen Förderband und Förderrichtung arbeitenden Walzen werden die nach Beschickung durch die Zellradschleuse auf dem Förderband aufliegenden Materialschnitzel über die Förderbandbreite verteilt und in ihrer Höhe so vergleichtmäßigt, daß nach dem Verlassen des Dosierers, also nach Passieren der Abstreifewalze ein lose gebildetes Materialschnitzelband auf dem Förderband aufliegt.

Dieses auf dem Förderband aufliegende Materialschnitzelband wird nun an einer Inertisieranlage vorbeigeführt. Die aus mindestens einem, vorzugsweise aber mehreren zu einer Wärmestrahlerbatterie zusammengefaßten Wärmestromerzeuger(n) bestehende Inertisieranlage verursacht eine schockartige Wärmestrahlungseinwirkung mit hoher Energiekonzentration.

Die Wärmestromerzeuger sind dabei parallel zur Förderebene, vorzugsweise linienförmig als Wärmestrahierbalken oberhalb und senkrecht zur Bewegungsrichtung des Förderbandes installiert.

Zusätzlich kann zur Erhöhung des Inertisierungsgrades eine weitere Inertisiereinrichtung vorgesehen werden.

Diese Inertisiereinrichtung befindet sich erfindungsgemäß am Ende des Förderbandes und ist hier so angeordnet, daß die vom Förderbandende abgeworfenen Materialschnitzel im freien Fall die zweite Inertisieranlage passieren. Auf diese Weise wird eine beidseitig Bestrahlung und damit Durchstrahlung der Materialschnitzel möglich.

Dazu besteht die zweite Inertisieranlage aus mindestens zwei sich in einem solchen Abstand gegenüberstehenden Wärmestromerzeugern, daß die Materialschnitzel, die mittels eines vorgelagertem Falltrichters geführt werden, im freien Fall problemlos passieren können.

Eine solche Erhöhung des Inertisierungsgrades ist insbesondere dann erforderlich, wenn die Schadstofffreiheit der Werkstoffe gewährleistet werden soll.

Durch die schockartige Wärmeeinstrahlung werden die Materialschnitzel inertisiert und aktiviert, bevor sie mit kristallbildenden wäßrigen Lösungen von mineralischen Bindemitteln gemischt werden. Dieser Prozeß erfolgt in der auf die Inertisieranlage folgenden Mineralisiereinrichtung. Die Mineralisiereinrichtung kann als Transportschnecke ausgebildet sein, in der das wassergelöste Mineral mit den inertisierten Materialschnitzeln, Wasser und/oder Schlamm zusammengebracht wird.

Während des Durchlaufs mineralisiert das aktivierte Schnitzelmaterial.

Im nachfolgenden Mischer erfolgt die abschließende Durchmischung der mineralisierten Materialschnitzel mit Lösungsresten des Minerals sowie Schlammanteilen, Bindemittel und Abwasser aus dem Staubabscheider.

Damit kann der Mischanlage ein bereits erfindungsgemäß einsetzbarer Werkstoff entnommen werden.

Enthalten die beigegebenen bzw. zugemischten Staubund/oder Schlammanteile biologisch-toxische Bestandteile, dann ist eine Nachbehandlung mit einer weiteren Inertisieranlage erforderlich.

Diese dann den technologischen Herstellungsprozeß abschließende Inertisier- bzw. Nachbehandlungsanlage kann analog zu den bereits beschriebenen Inertisieranlagen aufgebaut sein.

Die eigenschaftsmodifizierten Werkstoffe sind u.a. geeignet für
- die Verarbeitung zu mineralisch gebundenen Baugliedern in der Form von Leichtbetonfußböden, Dämmplatten, Leichtbeton- und Hohlblocksteinen sowie von Leichtbetonbauplatten zum Ausfachen von Skelettbauwerken;
- die Herstellung von schwingungsdämpfenden Maschinenfundamenten und von stoßbelasteten Zwischenschichten in Autobahn- und Gleisbaukörpern;
- die Einbringung von Schutzschichten für Geotextilien und Dichtungsfolien im Erdbau sowie Schüttungen mit wärme-, schall-, schwingungs- und strahlungsdämpfenden Wirkungen.

Inbesondere geben die nach diesem Verfahren hergestellten Werkstoffe den mineralisch gebundenen Baugliedern ein bisher im Bauwesen unbekanntes nichtsprödbrüchiges Verhalten bei dynamischen und hohen statischen Druckbeanspruchungen. Solche Bauglieder gewähren den daraus gefertigten Bauwerken Erdbebensicherheit und sind ein wirksames Mittel gegen die Schäden durch Infraschall u.a.m..

Als marktwirtschaftliche und technologische Vorteile der Produkte sind zu nennen:
- die Ausgangsstoffe sind kostengünstig und fallen in Form von Reststoffen und Recyclingprodukten massenhaft aus dem Industrie- und Bevölkerungsaufkommen an;
- es sind keine verlängerten Abbindezeiten erforderlich und eine sofortige Ausformung der hergestellten mineralisch gebundenen Bauglieder ist möglich, wobei die Verarbeitung unabhängig von Witterungseinflüssen durchgeführt werden kann.
- durch Mischungsverhältnisse, Inertisierung, Aktivierung und Verdichtung sind die modifizierbaren Eigenschaften der Werkstoffe für die Verarbeitung zu speziellen Schallschutz-, Wärmedämmungs-, Schwingungsdämpfungs- und Strahlungsabsorptionselementen einstellbar.

In einer weiteren Anwendungsform der Erfindung nach Anspruch 15 werden unter Einbeziehung der eigenschaftsmodifizierten Werkstoffe gasdurchtrittshemmende Konstruktionsschichten hergestellt. Derartige Konstruktionsschichten werden eingesetzt zur Abdeckung großflächiger, Gase emittierender Areale, wie z.B. Mülldeponien, Bergbauhalden, verfüllte Sumpflöcher und Moore.

Der prinzipielle Lösungsansatz besteht darin, daß die gasdurchtrittshemmende Schicht zwischen eine nichtsprödbrüchige Ober- und Unterschicht eingebracht wird. Zur Herstellung solcher nichtsprödbrüchiger Schichten eignen sich besonders mineralisierte und zementgebundene Materialschnitzel, die ein gleichartiges elastisches Verhalten wie die zu schützende Zwischenschicht aufweisen.

Diese gasdurchtrittshemmende Zwischenschicht besteht vorteilhaft aus einer wasserspeichernden und quellenden mineralischen Pulvermasse, die zwischen zwei elastischen Textilbahnen eingebracht und dort textil fixiert ist.

Der Effekt der Gasdurchtrittshemmung wird dadurch erzielt, daß sich in der wasserspeichernden mineralischen Pulvermasse eine ausreichend dicke Wasserschicht ausbildet, die einen Gasdurchtritt unterbindet.

Die erzielten Vorteile bestehen hier insbesondere darin, daß die nichtsprödbrüchigen flexiblen Konstruktionsschichten durch mögliche Belastungen nicht zerstört werden und wechselnden Beanspruchungen standhalten sowie durch die wasserspeichernde Wirkung des zwischen Vliesbahnen eingelagerten pulverförmigen quellfähigen Minerals eine sichere gasdurchtrittshemmende Schicht entsteht.

Ein wesentlicher Vorteil besteht auch in der die radioaktive Strahlung reduzierenden Wirkung der eingelagerten Wasserschicht im gequollenen Mineralpulver sowie in der Vermeidung der Emission von radioaktiven Gasen überhaupt.

Mit dem erfindungsgemäßen Verfahren und der zugehörigen Anlage werden erstmalig in Recyclingprozessen anfallende, bisher nicht verwertbare nichtmetallische Abfälle verarbeitet. Das betrifft insbesondere:
- Abfälle aus dem Autorecycling, wie gemischte Verbundstoffe mit Textilien, Plaste, Gummihaar, Jutefasern, Kunstleder, Leder u.a.m. Diese Materialien fallen unsortiert an und können ohne Flammenbehandlung inertisiert werden.
- Gerberei-Abwasserrückstände mit bakteriologischer Belastung (biologisch-toxische Stoffe)
- verunreinigte Plasteverpackungsmittel (Becher für Nahrungsmittel etc.)
- Alttextilien, die aus Deponiegut aussortiert werden; auch die Verarbeitung bereits gelagerter Alttextilien aus bestehenden Deponien heraus ist möglich.

Des weiteren ist ein vollständiger Ersatz mineralischer Zuschlagstoffe wie Sand, Kies und Splitt möglich.

Durch die erläuterte Eigenschaftsmodifizierung können mineralisch gebundene Werkstoffe bzw. Bauglieder mit in einer weiten Palette unterschiedlichen Eigenschaften hergestellt werden.

So können wärme-, schall-, schwingungs- und/oder strahlungsdämpfende Eigenschaften eingestellt werden.

Unter Nutzung der strahlungsdämpfenden Eigenschaften wurde ein neuer Anwendungsbereich für die erfindungsgemäß zu verarbeitenden Ausgangsprodukte gefunden; in Verbindung mit Geotextilien, z.B. mit radondichter Bentofix-Matte als elastische Schutzschicht bei Altbergbausanierungen oder als Bauuntergrundin radonbelasteten Gebieten.

Neue Eigenschaften sind auch
- die Wasserdurchlässigkeit selbst bei hoher Druckbelastung,
- die Beständigkeit bei Wasserlagerung,
- die Beständigkeit gegen Frost-Tau-Wechsel,
- die Stauchbarkeit bis 60 % ohne Bruch mit hoher Beständigkeit bei Dauerschwingungsbeanspruchung.

Die Erfindung wird nachstehend ohne Beschränkung des allgemeinen Erfindungsgedankens anhand von Ausführungsbeispielen ggf. unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: den schematischen Aufbau der Anlage zur Herstellung eigenschaftsmodifizierter Bau- bzw. Füllstoffe, dargestellt als Blockdiagramm,
- Fig. 2: die Dosiervorrichtung zur Erzielung gleichverteilter Flächenmassen,
- Fig. 3: die Reihenanordnung der Wärmestromerzeuger in der Inertisieranlage,
- Fig. 4: eine Inertisieranlage mit beidseitiger Durchstrahlung der Abfallschnitzel.
- Fig. 5: die Vorgehensweise, den Schichtaufbau bei der Abdeckung großflächiger gasemittierender Areale
- Fig. 6: die Anwendung des Verfahrens bei der Abdeckung stark radonemittierender Halden.

Das erfindungsgemäße Verfahren wird nachfolgend durch Rezepturbeispiele näher erläutert.
1. Herstellung von Wandbauplatten aus eigenschaftsmodifizierten Werkstoffen für mineralisch gebundene Bauglieder
   1.1. Zerkleinerte Textilabfälle aus Polyamid (Siebdurchgang 20 x 20 mm) werden auf einem Auftragsband mit einem Energieaufwand von ca. 0,54 kWh/m³ Abfälle thermisch inertisiert und aktiviert. Als Wärmequelle wird eine über dem Förderband aufgehängte Strahlerbalkenanordnung mit 1350 W-Halogeninfrarotleuchte eingesetzt. Anschließend kommen 435 1 dieser so vorbehandelten Textilschnitzel mit 60 1 Wasserglaslösung in einer Konzentration von 1,067 kg/dm³ (8 °Be) zum Mischen in einen Planetenmischer. Dem Mischvorgang werden nach einer Vormischung 100 kg Zement als Bindemittel und weitere 10 1 Wasserglas in einer Konzentration von 1,34 kg/dm³ (37 °Be) sowie 20 1 Anmachwasser zugegeben. Nach Beendigung des Mischvorganges von ca. 5 Minuten Dauer erfolgt die Abgabe des Mischgutes in eine Plattenformanlage zur Herstellung von Wandplatten in den Abmessungen von 740 x 320 x 140 mm.
   1.2. (Vergleichsbeispiel): Textilabfälle aus Polyamid und im Shredder zerkleinerte Alttextilien sowie nichtmetallische Materialien aus dem Autorecycling werden wie im Beispiel 1.1 durch Wärmebehandlung inertisiert und aktiviert. Anschiießend erfolgte eine Trockendurchmischung von 80 1 Textilabfällen aus Polyamid, 55 1 zerkleinerte Autoseitenteile, 80 1 grobe Schaumstoffflocken aus Autositzen, 100 1 zerkleinerte Duroplaste aus Trabantkarossen, 20 1 Gummihaar aus Autopolstern sowie 100 1 Alttextiliengemisch im Planetenmischer. Danach wird zugemischt: 60 1 Wasserglas mit einer Konzentration von 1,067 kg/dm³ (8 °Be), als Bindemittel 130 1 Zement, 20 1 Wasser als Anmachwasser, 10 1 Wasserglas mit einer Konzentration von 1,34 kg/dm³ (37 °Be) und 40 1 Kalziumchlorid-Lösung in einer Konzentration von 1,031 kg/dm³ (3 °Be) als mineralische Abbindebeschleuniger.
      Nach Beendigung des Mischvorganges können mit diesem Werkstoff in einem Leichtbeton ebenfalls auf der herkömmlichen Plattenformanlage Wandplatten in den Abmessungen 740 x 320 x 140 mm gefertigt werden.
2. (Vergleichsbeispiel): Herstellung von eigenschaftsmodifizierten Werkstoffen durch die Einarbeitung von Restschlamm aus einer Abwasseraufbereitungsanlage
   100 Volumenanteilen thermisch vorbehandelter Textilschnitzel werden 20 Volumenanteile Wasserglaslösung von 1,125 kg/dm³ (12 °Be) unter Zusatz von 20 Volumenanteilen Schlamm, bestehend aus einer Mischung von Gerbereischlamm und Magnetit als Fällungsmittel, sowie 20 Volumenanteile Zement als Bindemittel zugemischt. Nach einer Trockenzeit von 24 Stunden wird der entstandene mineralisch gebundene und locker geschüttete Werkstoff nochmals thermisch behandelt und damit inertisiert. Er ist danach geruchlos.
3. Herstellung von mineralisch gebundenen Werkstoffen durch die Einarbeitung von Abwasser
   3.1. Mit 10 Volumenanteilen Wasserglaslösung von 1,095 kg/dm³ (10 °Be) getränkte 100 Volumenanteile thermisch vorbehandelter und zwischenzeitlich abgetrockneter Textilschnitzel werden 40 Volumenanteile Gerbereiabwasser und 20 Volumenanteile Zement zugemischt. Nach 24-stündiger Lagerung entsteht mit nachfolgender Inertisierung daraus ein lockerer geruchloser zementgebundener Werkstoff für mineralisch gebundene Bauglieder.
   3.2. (Vergleichsbeispiel): 100 Volumenanteile thermisch vorbehandelter Textilschnitzel werden mit 10 Volumenanteilen Wasserglaslösung von 1,34 kg/dm³ (37 °Be), 40 Volumenanteilen Gerbereiabwasser und 25 Volumenanteilen Zement gemischt. Nach 24-stündiger Lagerung entsteht daraus ein geruchloser lockerer zementgebundener Werkstoff für mineralisch gebundene Bauglieder.

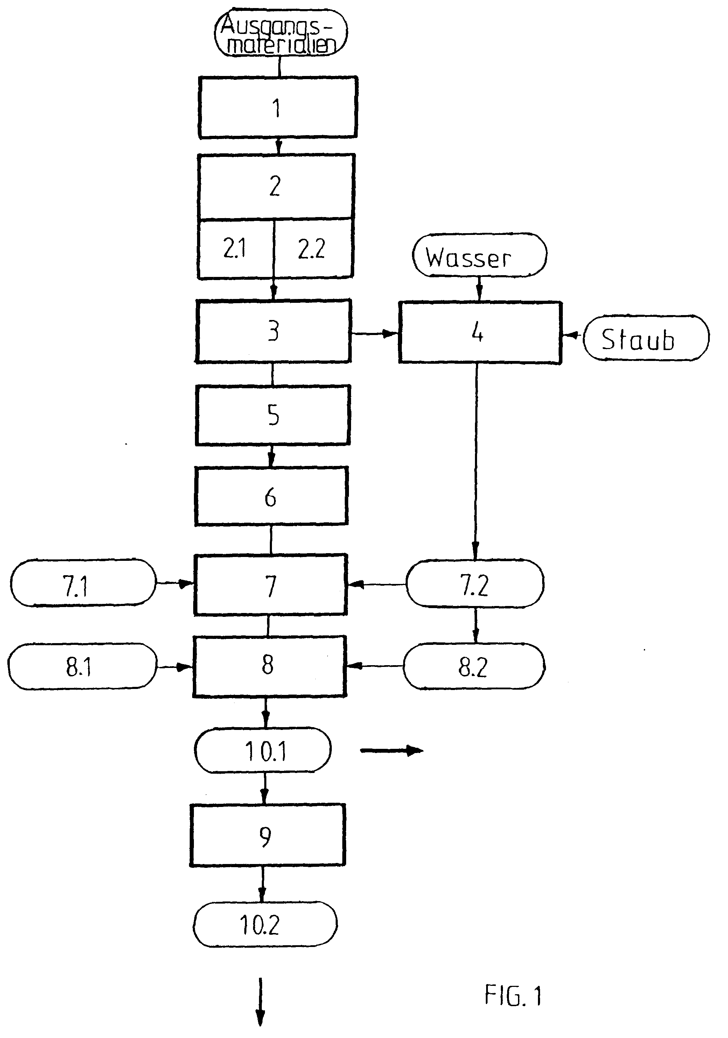

Fig. 1 zeigt die Kombination von Einrichtungen und Maschinen zu einer Anlage für die Herstellung eigenschaftsmodifizierter Werkstoffe.

Die zu zerkleinernden Materialien und/oder verschliessenen Erzeugnisse bzw. Reststoffe der Textil- Leder- und Kunstlederindustrie, nichtmetallische Altautowertstoffe und Verpackungsmittelabfälle werden getrennt nach hartteilbehafteten und hartteilfreien Massen über die Materialzuführung 1 mit einem Greifer aufgegeben und der Zerkleinerungseinrichtung 2 zugeführt. Die Zerkleinerungseinrichtung 2 besteht einmal aus einem Shredder für hartteilbehaftete Materialien 2.1, der nach dem Reversionsprinzip arbeitet; des weiteren aus einem Shredder für hartteilfreie bzw. metallfreie Materialien 2.2 und dabei insbesondere massenhaft anfallende Industrieabfälle aus Papier, Pappe, Leder, Kunstleder, Textil-, Plast- und Verbundmaterialien.

Die gemischt in die Zerkleinerungseinrichtung eingebrachten Materialien werden pneumatisch in die Entstaubungseinrichtung 3 gefördert.

Die staubbeladene Abluft wird von der Entstaubungseinrichtung in einen Staubabscheider 4 geleitet. Hier wird der Staub durch Sprühwasser ausgeschlämmt. Gleichzeitig kann in diesen Staubabscheider staubförmiger Abfall eingeblasen und zur weiteren Verarbeitung in gleicher Weise ausgeschlämmt werden.

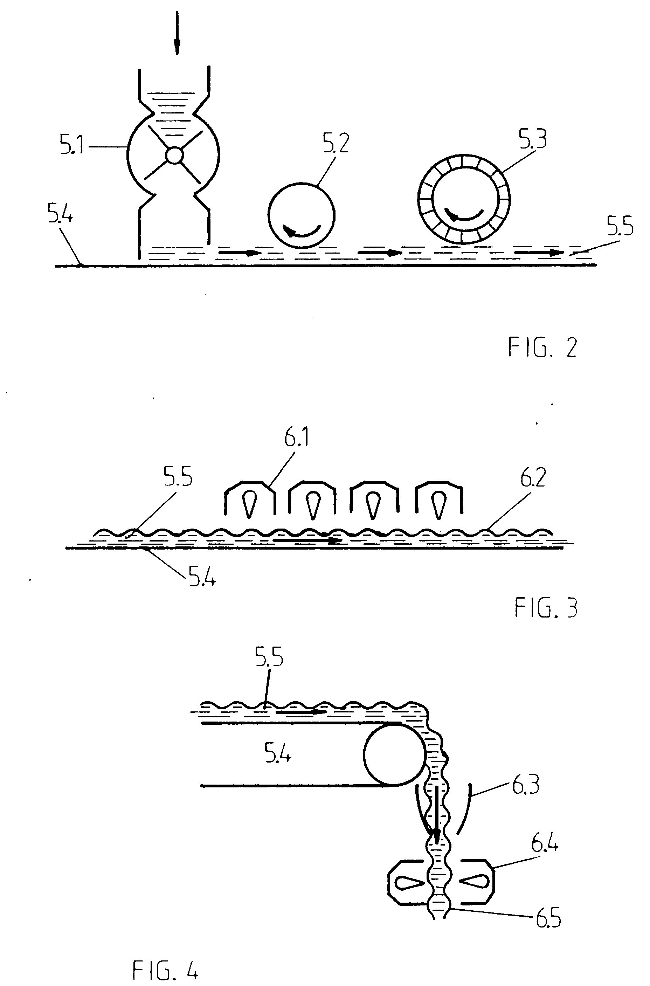

Die in der Zerkleinerungseinrichtung 2 erzeugten Materialschnitzel werden aus der Entstaubungseinrichtung 3 dem Dosierer 5 im freien Fall zugeführt. Der Aufbau des Dosierers ist in Fig. 2 veranschaulicht.

Aus der Zellradschleuse 5.1 werden die Abfallschnitzel portionsweise auf ein Förderband 5.4 abgeworfen, mit einer gegenläufig zur Förderrichtung angetriebenen Ausbreitewalze 5.2 quer zur Transportrichtung verteilt und mit einer ebenfalls gegenläufigen Abstreifwalze 5.3 zu einem Materialschnitzelband 5.5 mit etwa gleicher Massenverteilung auf dem Förderband 5.4 aufgelegt.

Mit dem Dosierer wird also eine etwa gleichverteilte Flächenmasse des Materialschnitzelbandes 5.5 erzielt, so wie sie zur nachfolgenden Inertisierung notwendig ist.

Nach Fig. 3 besteht die Inertisiereinrichtung aus einem Wärmestromerzeuger 6.1, der aus einer Reihenanordnung von vier Stahlerbalken, verteilt über etwa 1 m Einsatzlänge, aufgebaut ist.

Die Strahler haben jeweils eine Breite von 1,00 m. Als Strahler selbst können Halogeninfrarotleuchten eingesetzt werden.

Unter dem Wärmestromerzeuger wird das Materialschnitzelband 5.5 auf dem Förderband 5.4 liegend mit einem Energieeinsatz von ca. 0,5 kWh/m³ behandelt und es verläßt als inerte Materialschnitzel 6.2 die Inertisiereinrichtung.

Die Erhöhung des Inertisierungsgrades wird erreicht durch eine Behandlung der Materialschnitzel im freien Fall, nachdem sie das Förderband verlassen haben.

Dazu wird eine an das Förderband 5.4 in der Abwurfrichtung anschiießende Vorrichtung nach Fig. 4 eingesetzt, die aus einem Falltrichter 6.3 und einem zweiten Wärmestromerzeuger 6.4 besteht, der eine beidseitige Bestrahlung der Materialschnitzel 6.2 sicherstellt. Durch Einsatz des Falltrichters 6.3 werden die im freien Fall herabfallenden Materialschnitzel so geführt, daß die Schnitzel zwischen zwei beabstandet gegenüber stehenden Strahlerbalken 6.4 lose hindurchfallen.

Mit dieser Anordnung nach Fig. 4 können beidseitig bestrahlte, und damit inertisierte Materialschnitzel erzeugt werden. Diese Art der Inertisierung ist besonders für recyceltes, biologisch toxisches Material erforderlich.

Der Inertisiereinrichtung 6 ist, wie aus Fig. 1 ersichtlich, ein Mineralisiereinrichtung 7 nachgeschaltet, in der die inertisierten Materialschnitzel 6.5 mit der wäßrigen Lösung des Minerals 7.1 und anderen Beimischungen, wie z.B. Schlamm 7.2 aus dem Staubabscheider oder Abfallschlamm in Berührung gebracht werden. Die Mineralisiereinrichtung 7 wird beispielsweise gebildet aus einer handelsüblichen Trog-Transportschnecke, in der das wassergelöste Mineral mit den inertisierten Materialschnitzeln, Wasser und/oder Schlamm während des Transportvorganges inniglich durchmischt werden.

Gleichzeitig mineralisiert das aktivierte Schnitzelmaterial.

Dem Mischer 8 werden die mineralisierten Materialschnitzel mit Lösungsresten des Minerals und Schlammteilen sowie Bindemittel 8.1 und Abwasser 8.2 aus den Staubabscheider 4 zugeführt. Als Mischer dient vorteilhaft ein handelsüblicher Zwangsumlaufmischer. Im Ergebnis des Mischvorgangs entsteht bereits ein verwendbares Produkt 10.1.

Die Kombination der Einrichtungen 1 bis 8 muß durch eine Nachbehandlungseinrichtung 9 ergänzt werden, wenn die dem Mischer 8 zugeführten Staub-, Schlamm- oder Abwasseranteile noch biologisch-toxische Bestandteile enthalten. Die Nachbehandlungseinrichtung 9 ist wie die Inertisiereinrichtung 6 ausgeführt. Vorteilhaft eignet sich die Inertisiereinrichtung nach Fig. 4 als Nachbehandlungseinrichtung, wobei der Werkstoff aus dem Mischer 8 über ein Förderband 5.4 zum Falltrichter 6.3 transportiert wird.

Der Wärmestromerzeuger 6.4 der Nachbehandlungseinrichtung besteht aus sich gegenüber stehenden Wärmestrahlerquellen, die den im freien Fall passierenden Werkstoff beidseitig durchstrahlen.

Die geringen Halbwertsdicken der durchstrahlten Werkstoffteile gewährleisten die Wirksamkeit der Nachbehandlung und damit die vollständige Inertisierung des Werkstoffes als Endprodukt 10.2.

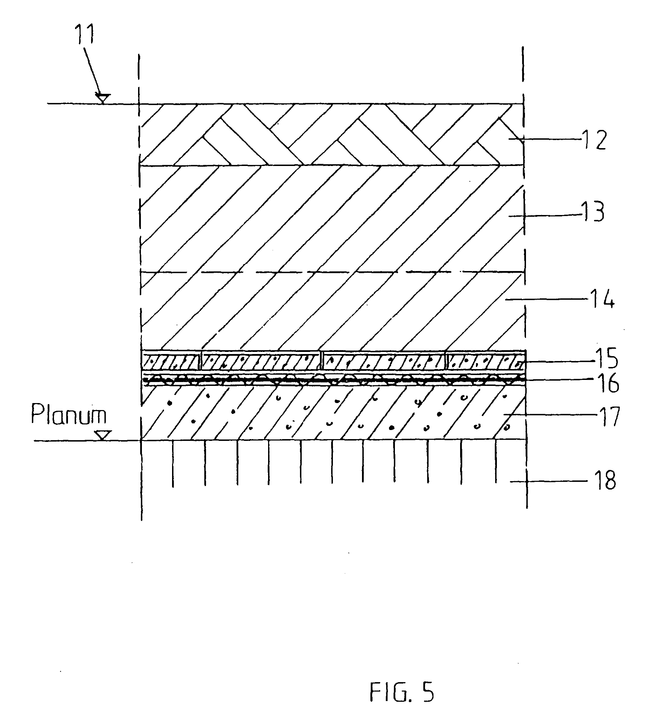

Vorgehensweise und Schichtaufbau beim Einsatz des erfindungsgemäß hergestellten Werkstoffes zur Abdeckung großflächiger, gasemittierender Areale sind aus Fig. 5 ersichtlich.

Die Konstruktionsschichten sind in ihrer Dicke den jeweiligen Gegebenheiten anzupassen und die Uberschüttungen mit mineralischem Boden und mit Oberboden (Kulturboden) sind entsprechend den Vegetationsbedingungen der gewünschten land- oder forstwirtschaftlichen Nutzung festzulegen.

Trotz Planierens und Verdichtens des Haldenmaterials 8 auftretende Unebenheiten im Planum können durch Aufbringen einer genügend dicken Schicht aus mineralisiertem Textilschnitzel-Zement-Ortbeton 17 ausgeglichen werden. Erfindungsgemäß wird auf diese Textilschnitzel-Zement-Ortbetonschicht 17 die Dichtungsmatte 16 und darauf eine Abdeckschicht 15 aus vorgefertigten Platten eines Textilschnitzel-Zement-Betons oder ein Ortbeton gemäß Schicht 17 aufgebracht. Darüber werden die Bodenschichten 14, 13 und 12 als Uberdeckung und Vegetationsschicht geschüttet.

Für dieses Ausführungsbeispiel wurde folgender Schichtaufbau gewählt. Auf die ca. 5 cm starke Abdeckschicht 15 wird ein Mineralboden 14 aus Abraum- oder Recyclingmaterial in einer Schüttung von mindestens 20...50 cm aufgetragen. Darauf aufbauend wird ein vegetationsfreundlicher Mineralboden 13 in einer Stärke von mindestens 50 cm aufgebracht. Zur Geländeoberfläche 11 folgt darauf ein ca. 30 cm starker Oberboden 12 nach DIN 18300.

Als Dichtungsmatte 16 wird ein quellfähiges wasserspeicherndes Mineral zwischen Vliesbahnen eingebracht. Die Schicht 17 aus mineralisierten Textilschnitzel-Zement-Ortbeton ist durchschnittlich mindestens 12 cm dick.

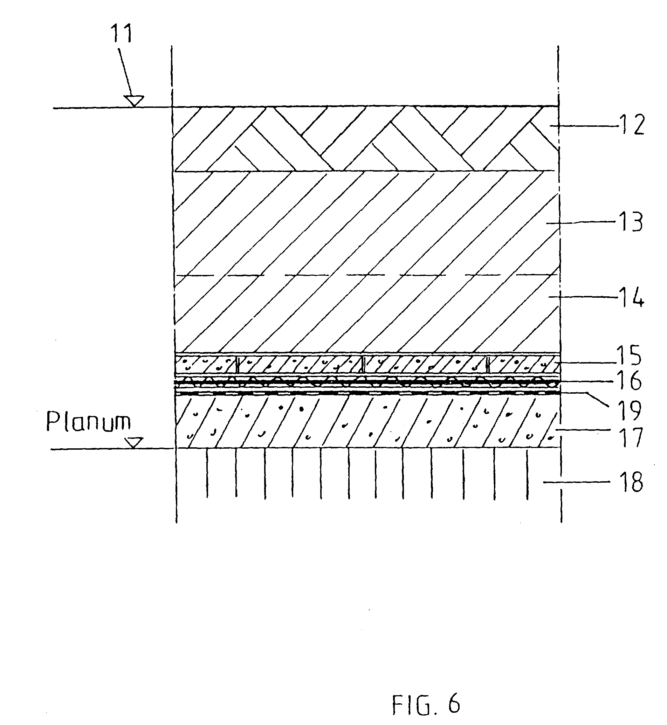

Im Ausführungsbeispiel nach Fig. 6 wird der erfindungsgemäße Werkstoff zur Abdeckung radonemittierender Halden angewendet.

Die zugehörige Konstruktion der Abdeckung ist in Form ihres Schichtaufbaus aus Fig. 6 ersichtlich. Dabei sind die Schichten 11 bis 16 analog zum Ausführungsbeispiel nach Fig. 5 angeordnet bzw. aufgebaut.

Eine Besonderheit ist hierbei die bei hoher Intensität der Emission von Radon im Haldenmaterial vorzusehende zusätzliche Kunststoffdichtungsbahn 19 zwischen dem mineralisierten Textilschnitzel-Zement-Ortbeton 17 und der wasserspeichernden Schicht 16. Bei dieser Anordnung der Kunststoffdichtungsbahn 19 werden die bisher beim Einsatz von nicht eingebetteten Kunststoffdichtungsbahnen aufgetretenen Nachteile vermieden.

## Patentansprüche

1. Verfahren zur Herstellung eigenschaftsmodifizierter Werkstoffe für mineralisch gebundene Bauglieder bei thermischer Behandlung im Sinne einer energetischen Aktivierung der als Füllstoffe eingesetzten Ausgangsmaterialien und ihrer nachfolgenden Mineralisierung,
**dadurch gekennzeichnet**, daß zerkleinerte hochpolymere Materialschnitzel natürlichen oder synthetischen Ursprungs einer schockartigen Wärmestrahlungseinwirkung mit einem Temperaturgradienten von mindestens 20 K je mm Durchlauflänge vor und nach einer Brennlinie, in der sich mehr als 600° C Farbtemperatur messen lassen, ausgesetzt, dadurch inertisiert und thermisch im Bereich einer molaren Energie von 60 bis 170 kJ*mol⁻¹ aktiviert und sodann in einem ersten Mineralisierungsschritt einer kristallbildenden Lösung aus Abbindebeschleunigern und
in einem zweiten Behandlungsschritt in einem Zwangsmischer eine Durchmischung der mineralisierten Materialschnitzel durch Zugabe von Bindemittel in einer solchen Menge erfolgt, daß die Bindemittel die zerkleinerten Materialschnitzel nicht vollständig umschließen und sie mit der Grundmatrix eines daraus zu bildenden Verbundwerkstoffes eine festhaftende Verbindung eingehen.

2. Verfahren nach Anspruch 1,
**dadurch gekennzeichnet**, daß als Abbindebeschleuniger Wasserglas oder lösliche Siliziumfluoride zur gleichzeitigen flammwidrigen und verwitterungsbeständigen Ausrüstung der damit behandelten Materialien in Verbindung mit Zement, Gips oder anderen keramischen Stoffen als Bindemittel eingesetzt werden.

3. Verfahren nach Anspruch 1 oder 2,
**dadurch gekennzeichnet**, daß die Verteilungsdichte der - auf den Oberflächen der so behandelten Materialien - festhaftenden Kristallkomplexe durch die mit der Durchlaufgeschwindigkeit zu regelnde Dosis der aufgebrachten Aktivierungsenergie und die Konzentration der in wäßriger Lösung befindlichen mineralischen Abbindebeschleuniger beeinflußt wird.

4. Verfahren nach einem der Ansprüche 1 bis 3,
dadurch gekennzeichnet, daß die kristallbildenden anorganischen Stoffe aus einer Mischung aus Silikatgelen und Zement bestehen, partiell auf die Oberflächen von sonst elastischen hochpolymeren Materialien aufgebracht werden und damit die Struktur eines so hergestellten Verbundwerkstoffes nichtsprödbrüchig machen und ihm wärme-, schall- und schwingungsdämpfende Eigenschaften geben.

5. Verfahren nach einem der Ansprüche 1 bis 4,
dadurch gekennzeichnet, daß der Lösung von kristallbildenden anorganischen Stoffen Materialien mit strahlungsenergieabsorbierenden Wirkungen wie inerten Blei- und Borverbindungen. Aluminiumhydroxid, Gadoliniumoxid oder Magnetit beigemischt und unlöslich eingebunden werden. wodurch den daraus hergestellten Werkstoffen Strahlenschutzeigenschaften verliehen werden.

6. Verfahren nach einem der Ansprüche 1 bis 5.
dadurch gekennzeichnet, daß die formbare Werkstoffmischung in herkömmlichen Formanlagen zu mineralisch gebundenen Baugliedern wie Pflanzlochplatten, Dämmplatten, Hohlblocksteine oder Wandleichtbauelemente verarbeitet wird .

7. Verfahren nach einem der Ansprüche 1 bis 5,
dadurch gekennzeichnet, daß bei Lufttrocknung die nur locker gelagerte Masse ein Schüttgut zur Verwendung als eigenschaftsmodifizierter, mineralisch gebundenener Füllstoff ergibt, der beispielsweise in Ortbeton, Fußbodenmörtel oder als Leichtzuschlagstoff eingesetzt wird.

8. Werkstoff, herstellbar nach einem Verfahren gemäß der Ansprüche 1 bis 7.
**dadurch gekennzeichnet,** daß
- eine gleichmäßige Verteilung der Materialschnitzel, sämtlicher verfahrensgemäßer Beimischungen und damit der Kristallbildung sowie der Kristallkomplexe im Werkstoff vorherrscht,
- die Bindemittel die zerkleinerten Materialschnitzel nicht vollständig umschließen, sondern sich zwischen benachbarten Materialschnitzeln mit partiell verteilten, festhaftenden Kristallkomplexen Brücken aus dem Bindemittelgel. z.B. Zementleim, ausbilden und diese bei dessen Erhärtung die Materialschnitzel fest verkitten,
- die steuerbare Verbindung der Mischungskomponenten durch mineralische Bindung mit Zement über die festhaftenden Kristalle erfolgt, wodurch das Festigkeits- und Elastizitätsverhalten beeinflußbar ist.

9. Anlage zur Durchführung des Verfahrens nach Anspruch 1 bis 7, wobei als Ausgangsmaterial insbesondere Materialschnitzel bzw. Recyclingprodukte der Textil-, Leder- und Kunstlederindustrie, nichtmetallische Altautowertstoffe und Verpackungsmittelwertstoffe verwendet werden, **gekennzeichnet** durch die Kombination der folgenden hintereinander angeordneten Anlagenteile
- einer Materialzuführungseinrichtung (1), wobei hartteilbehaftete und hartteilfreie Massen vorzugsweise getrennt eingegeben werden,
- einer Zerkleinerungseinrichtung (2), die aus je einen Shredder für die vorzugsweise separat erfolgende Zerkleinerung der hartteilbehafteten (2.1) und der hartteil- bzw. metallteilfreien Materialien (2.2) besteht,
- einer Entstaubungseinrichtung (3) für die zerkleinerte Materialschnitzelmischung, wobei zur Ableitung der staubbeladenen Abluft ein Staubabscheider (4) vorhanden ist, der zur Rückführung ausgeschlämmter Staubanteile in den Verarbeitungsprozeß der Anlage mit der Mineralisierungseinrichtung (7) bzw. dem Mischer (8) gekoppelt ist,
- einem Dosierer (5), dem die erzeugten Materialschnitzel aus der Entstaubungseinrichtung (3) vorzugsweise im freien Fall zugeführt werden und der die Materialschnitzel auf einem Förderband (5.4) vergleichmäßigt,
- eine Inertisieranlage (6), die aus Wärmestromerzeugern (6.1) mit einem Temperaturgradienten von mindestens 20 K je mm Durchlauf länge vor und nach einer Brennlinie, in der sich mehr als 600°C Farbtemperatur messen lassen, besteht,
- eine Mineralisiereinrichtung (7), in der die inertisierten Materialschnitzel (6.2) mit der wäßrigen Lösung des Minerals (7.1) und anderen Beimischungen, wie beispielsweise Schlamm (7.2) aus dem Staubabscheider (4) oder Abfallschlamm in Berührung kommen,
- einen Mischer (8) zur abschließenden Durchmischung der mineralisierten Materialschnitzel mit Lösungsresten des Minerals, mit Bindemittel (8.1) sowie Schlammanteilen und Abwasser (8.2) aus dem Staubabscheider (4).

10. Anlage nach Anspruch 8,
**dadurch gekennzeichnet**, daß der Dosierer (5) aus einer Zellradschleuse (5.1), einer Ausbreitewalze (5.2), einer Abstreifewalze (5.3) und einem Förderband (5.4) aufgebaut ist, auf dem die so behandelte Materialmischung bzw. das den Dosierer (5) verlassende Materialschnitzelband (5.5) aufliegt, wobei Ausbreitewalze (5.2) sowie Abstreifewalze (5.3) gegenläufig zur Bewegungsrichtung des Förderbandes (5.4) angetrieben sind.

11. Anlage nach Anspruch 8 oder 9,
**dadurch gekennzeichnet**, daß die Massedosierung mit dem Austragsrad der Zellradschleuse (5.1) erfolgt, wobei die Dosierung drehzahlabhängig ist,
daß als Abstreifewalze (5.3) eine Schlag- oder Bürstenwalze eingesetzt ist und
daß das Förderband (5.4) als Gurtband, Plattenförderer oder Kratzenförderer ausgebildet ist.

12. Anlage nach Anspruch 8,
**dadurch gekennzeichnet**, daß die Inertisieranlage (6) eine Reihenanordnung von parallel zur Förderebene, vorzugsweise rechtwinklig zur Förderrichtung installierten Wärmestrahlungsquellen (6.1) aufweist, die oberhalb des aus dem Dosierer (5) austretenden, auf dem Förderband (5.4) aufliegenden Materialschnitzelbandes (5.5) angeordnet sind und zusätzlich zu den einseitig oberhalb des Förderbandes (5.4) angeordneten Wärmestromerzeugern (6.1) eine zweite die inerten Materialschnitzel (6.2) erneut und beidseitig durchstrahlende Inertisiereinrichtung (6.4) einbaubar ist, die aus sich gegenüber stehenden Wärmestromerzeugern (6.4) mit einem darüber befindlichen auf den Abstandsspalt zwischen den Wärmestromerzeugern (6.4) ausgerichteten Falltrichter (6.3) besteht, wobei die zu behandelnden Materialschnitzel die Inertisiereinrichtung (6.4) vorzugsweise im freien Fall passieren.

13. Anlage nach einem der Ansprüche 8 bis 11,
**dadurch gekennzeichnet**, daß die Mineralisiereinrichtung (7) als Transportschnecke ausgebildet ist und daß als Mischer (8) ein handelsüblicher Zwangsumlaufmischer einsetzbar ist.

14. Anlage nach einem der Ansprüche 8 bis 12,
**dadurch gekennzeichnet**, daß bei eingesetzten biologischtoxische Bestandteilen im Anlageninput dem Mischer (8) eine Nachbehandlungseinrichtung (9) nachgeschaltet ist, die analog zur Inertisiereinrichtung (6) ausgeführt ist und daß diese Nachbehandlungseinrichtung (9) mit den Elementen Falltrichter (6.3) und sich gegenüber stehenden Wärmestromerzeugern (6.4) unter Nutzung des Prinzips des freien Falls ausgeführt ist.

15. Eigenschaftsmodifizierte Werkstoffe zur Verwendung als gasdurchtrittshemmende Konstruktionsschichten, erhältlich nach dem Verfahren gemäß Anspruch 1,
**dadurch gekennzeichnet**, daß zwischen nichtsprödbrüchigen Schichten (15; 17) aus mineralisierten und zementgebundenen Materialschnitzeln bzw. Recyclingprodukten der Textil-, Leder- und Kunstlederindustrie eine wasserzurückhaltende, quellende und dadurch gasdurchtrittshemmende Zwischenschicht (16) eingebracht wird, diese als wasserspeichernde mineralische Pulvermasse zwischen zwei elastischen Textilbahnen ausführbar und in diesem Fall dort textil fixiert ist, wobei deren Trägerschicht auf der unteren Schicht (17) aus mineralisierten und zementgebundenen Werkstoffen aufliegt.

16. Gasdurchtrittshemmende Konstruktionsschicht nach Anspruch 14,
**dadurch gekennzeichnet,** daß die Zwischenschicht (16) als Dichtungsmatte ausgeführt wird und die aufliegende Abdeckschicht (15) aus vorgefertigten Platten eines erfindungsgemäß eigenschaftsmodifizierten Werkstoffes oder aus Ortbeton daraus gemäß Schicht (17) aufgebaut ist, wobei der wasserdurchlässige eigenschaftsmodifizierte Werkstoff Oberflächenwasser zur Feuchthaltung der wasserspeichernden gasdurchtrittshemmenden Zwischenschicht hindurchläßt.

17. Gasdurchtrittshemmende Konstruktionsschicht nach Anspruch 14 oder 15,
**dadurch gekennzeichnet,** daß zur Abdeckung radonemittierender Halden eine zusätzliche Kunststoffdichtungsbahn (19) zwischen dem eigenschaftsmodifizierten Werkstoff als Ortbeton (17) und der wasserspeichernden Schicht (16) vorgesehen ist, die den Eintrag radongastransportierender Flüssigkeiten in die Dichtungsmatte unterbindet.

## Claims

1. A process for producing materials with modified properties for minerally bonded components including a thermal treatment for the purposes of an energetic activation of the raw materials used as fillers and their subsequent mineralization,
wherein size-reduced high-polymeric material chips of natural or synthetic origin are exposed to a shock-type heat radiation with a temperature gradient of at least 20 K per mm passage distance before and after a burning line in which a colour temperature of more than 600° C is observed, thereby made inert and activated in the range of a molar energy of 60 to 170 kJ*mol⁻¹, and wherein hereafter in a first mineralization step of a crystal-forming solution of setting accelerators and
in a second treatment step in a positive mixer an intermixing of the mineralized material chips is performed adding binding agent in such a quantity that the binding agents not completely enclose the material chips and that they form a durable bond with the matrix of a composite material to be produced therefrom.

2. The process of Claim 1,
wherein water glass or soluble silicon fluorides are used as setting accelerators simultaneously finishing the materials treated therewith to be flame-resistant and non-weathering in connection with cement, gypsum or other ceramic material as binding agents.

3. The process of Claim 1 or 2,
wherein the distribution density of the crystal complexes durably adherent to the surfaces of the materials treated thereby is affected by the dosage of the activation energy applied being controlled by means of the passing speed, and by the concentration of the mineral setting accelerators being in aqueous solution.

4. The process of any one of the Claims 1 to 3,
wherein the crystal-forming anorganic materials consist of a mixture of silicate gels and cement, are partially applied to the surfaces of otherwise elastic high-polymeric materials and therewith make the structure of a composite material thereby produced insensitive to brittle fracture and give this composite material heat-, sound-, and vibration-damping properties.

5. The process of any one of the Claims 1 to 4,
wherein materials having radiation energy absorbing properties such as inert lead compounds, boron compounds, aluminium hydroxide, gadolinium oxide or magnetite are admixed to, and insolubly bound in, the solution of crystal-forming anorganic materials, whereby radiation protection properties are given to the materials produced therefrom.

6. The process of any one of the Claims 1 to 5,
wherein the formable material mixture is processed in conventional mould installations to produce minerally bonded components such as multiple plant pots, insulating boards, hollow blocks, or light-weight wall building components.

7. The process of any one of the Claims 1 to 5,
wherein, when air-dried, the loosely stored material is a bulk material for use as a minerally bonded filler with modified properties in, for example, in-situ concrete, flooring mortar, or as a light-weight aggregate.

8. A material being producible by a process of any one of the Claims 1 to 7, in which
- a homogeneous distribution of the material chips, of all admixtures appropriate to the process, and, therefore, of the crystal forming as well as of the crystal complexes prevails in the material,
- the binding agents enclose the material chips not completely, but bridges of the binder gel, for example cement paste, develop between adjacent material chips with partially distributed, durably adherent crystal complexes and, on hardening of the binder, permanently cement these material chips,
- the components of the mixture are controllably bonded by mineral binding with cement across the durably adherent crystals, whereby the strength and elasticity behaviour is influenced.

9. An installation to execute the process of any of the Claims 1 to 7 in which particularly material chips or recycling products of textile, leather or synthetic leather industries, useful non-metallic automobile recycling products, and packaging recycling products are used as raw materials,
wherein a combination is made of the following successively arranged installation units
- of a material feed device (1) with materials loaded with hard matter and not loaded with hard matter preferably fed separately,
- of a size-reduction device (2) which consists of a shredder for the preferably separate size-reduction of each the material loaded with hard matter (2.1) and the material free of hard matter or metal parts respectively (2.2),
- of a dedusting device (3) for the size-reduced material chip mixture with a dust separator (4) to lead off the dust-laden exhaust air, the dust separator being connected with the mineralization device (7) or the mixer (8) in order to return elutriated dust into the process executed by the installation,
- of a metering device (5) to which the material chips produced are fed from the dedusting device (3) preferably by gravitation, and which increases the uniformity level of the material chips on a conveyor belt (5.4),
- of a inertizing device (6) which consists of heat flow generators (6.1) producing a temperature gradient of at least 20 K per mm passage distance before and after a burning line in which a colour temperature of more than 600° C is measured,
- of a mineralization device (7) in which the inertized material chips (6.2) come into contact with the aqueous solution of the mineral (7.1) and other additives such as, for example, sludge from the dust separator (4) or waste sludge,
- of a mixer (8) to finally mix the mineralized material chips with remainders of the mineral solution, with binding agent (8.1) as well as with shares of sludge and waste water (8.2) from the dust separator (4).

10. The installation of Claim 8,
wherein the metering device (5) consists of a rotary-vane feeder (5.1), a spreading roll (5.2), a scraper roll (5.3), and a conveyor belt (5.4) on which the material mixture processed in the said manner or the mat of material chips (5.5) leaving the metering device (5) lies, the spreading roll (5.2) and the scraper roll (5.3) being driven opposite to the direction of motion of the conveyor belt (5.4).

11. The installation of Claim 8 or 9,
wherein the weight metering is done by the output wheel of the rotary-vane feeder (5.1) and is speed-dependent,
wherein a beating or brush roll acts as the scraper roll (5.3), and
wherein the conveyor belt (5.4) is designed as a cord belt, apron conveyer, or scraper-chain conveyor.

12. The installation of Claim 8,
wherein the inertizing device (6) is formed as a row of heat radiation sources (6.1) arranged parallel to the transport plane and preferably normal to the transport direction which are located above the mat of material chips (5.5) leaving the metering device (5) and lying on the conveyor belt (5.4),
and wherein, in addition to the heat flow generators (6.1) arranged one-sidedly above the conveyor belt (5.4), a second inertizing device can be installed which transmits radiation through the material chips (6.2) for another time and from two sides, and which consists of heat flow generators (6.4) arranged opposite to each other and provided with a free-fall hopper (6.3) located above and oriented to the gap between the heat flow generators (6.4), the material chips to be treated passing the inertizing device (6.4) preferably gravity-driven.

13. The installation of any of the Claims 8 to 11,
wherein the mineralization device (7) is designed as a conveyor screw, and wherein a commercially available positive mixer can be used as the mixer (8).

14. The installation of any of the Claims 8 to 12,
wherein when biologically toxic components are included in the input to the installation downstream of the mixer (8), a re-treatment device (9) is arranged which is designed analogous with the inertizing device (6),
and wherein the said re-treatment device (9) with the elements free-fall hopper (6.3) and heat flow generators (6.4) arranged opposite to each other is designed to the principle of free fall.

15. Materials with modified properties for use as gas-passage blocking structural layers producible by the process of Claim 1,
whereby a water-retaining, swelling and, therefore, gas-passage blocking intermediate layer (16) is placed between layers (15; 17) insensitive to brittle fracture and made from mineralized and cement-bonded material chips or recycling products of the textile, leather or synthetic leather industries, and the said intermediate layer (16) is formable into a water-storing, mineral powder material between two elastic textile webs and in this case fixed by way of textiles, the carrier layer of it bearing on the lower layer (17) of mineralized and cement-bond materials.

16. The gas-passage blocking structural layer of Claim 15,
wherein the intermediate layer (16) is designed as a sealing mat and the cover layer (15) bearing on it is made of prefabricated plates of a material with modified properties according to the invention or of in-situ concrete made from it according to layer (17), the water-permeable material with modified properties allowing for surface water passage to keep the water-storing, gas-passage blocking intermediate layer humid.

17. The gas-passage blocking structural layer of Claim 15 or 16,
wherein, in order to cover radon-emitting dumps, an additional plastic sealing web (19) which prevents the inflow of radon gas transporting liquids into the sealing mat, is provided between the material with modified properties made into in-situ concrete (17) and the water-storing layer (16).

## Revendications

1. Procédé pour fabriquer des matériaux aux propriétés modifiées pour éléments de construction qui sont combinés aux minéraux par un traitement thermique au sens d'une activation énergétique des substances de base employées comme matières de remplissage et de leur minéralisation postérieure. Ce procédé fonctionne comme suit: Des rognures haut-polymères broyées d'origine naturelle ou artificielle sont exposées à un choc de rayonnement thermique avec un gradient thermique minimale de 20 K par mm de longueur de passage devant et derrière une ligne caustique où la température de couleur atteint 600° C. De cette manière elles sont inertisées et activées thermiquement dans une gamme d'énergie molaire de 60 à 170 kJ/mol⁻¹. Puis la première phase de minéralisation se passe dans une solution cristallisatrice composée d'accélérateurs de prise, le deuxième pas du traitement se déroule dans un malaxeur à mélange forcé où les rognures du matériau sont entremélangées, un liant est ajouté dans une quantité qui empêche un enfermement total des rognures, ces dernières entrent en combinaison fixe avec la matrice de base d'un matériau composite qui en peut être fabriqué.

2. Procédé d'après revendication 1,
caractérisé par l'emploi de verre soluble ou de fluosilicates solubles comme liant pour donner en même temps des propriétés ininflammables et la résistance à la décomposition par les intempéries aux matériaux ainsi traités en combinaison avec ciment, plâtre et autres matières céramiques.

3. Procédé d'après revendication 1 ou 2,
caractérisé par l'influence exigée sur la densité de distribution des complexes de cristal adhérent sur les surfaces des matériaux ainsi traités et par la dose de l'énergie d'activation appliquée réglable par la vitesse de passage et par la concentration des accélérateurs de prise minéraux dans une solution aqueuse.

4. Procédé d'après une des revendications 1 à 3,
caractérisé par l'application des matières cristallisatrices inorganiques composées d'un mélange de silicagels et de ciment sur les surfaces de matières haut-polymères d'ordinaire élastiques ce qui donne des propriétés antisoniques et antivibratiles au matériau composite fabriqué de cette manière et le fait insensible à la rupture de fragilité.

5. Procédé d'après une des revendications 1 à 4,
caractérisé par l'addition et l'intégration insoluble de matières qui absorbent l'énergie rayonnante telles que les combinaisons inertes du plomb et du bore, l'hydroxide d'aluminium, l'oxyde de gadolinium ou la magnétite à la solution de matières cristallisatrices inorganiques, ce qui donne aux matériaux qui en sont fabriqués des propriétés de protection contre les rayonnements.

6. Procédé d'après une des revendications 1 à 5,
qui permet d'utiliser ce mélange des matériaux déformable pour la fabrication d'éléments combinés aux minéraux tels que plaques à trous pour poquets, plaques calorifuges, blocs creux ou panneaux légers préfabriqués à l'aide des installations de modelage classiques.

7. Procédé d'après une des revendications 1 à 5,
caractérisé d'un séchage à l'air qui provoque la transformation de la masse peu compacte en matériaux en vrac appropriés comme matière de remplissage aux propriétés modifiées et combinée aux minéraux, qui est ajoutée p. e. au béton préparé en place, au mortier pour plancher ou utilisée comme agrégat léger.

8. Matériau, fabricable d'après un procédé conforme à une des revendications 1 à 7, caractérisé comme suit:
- une répartition homogène des rognures, de toutes les additions conformes au procédé et ainsi de la cristallisation et des complexes de cristal est donnée,
- les liants n'enferment pas entièrement les rognures broyées, mais des ponts en liant à gel, p. e. pâte de ciment, se forment entre rognures voisines et complexes de cristal adhérents répartis partiellement, les rognures étant fortement cimentées par ces ponts lors du procédé de la prise du liant,
- la combinaison des constituants de mélange gouvernable par une liaison minérale avec ciment sur les cristaux adhérents, ce qui permet d'influer sur les caractéristiques mécaniques et la force élastique,

9. Installation pour mettre en oeuvre le procédé d'après revendication 1 à 7, des rognures resp. des produits recyclés de l'industrie textile, de cuir et de cuir imité, des matières valables non-métalliques de vieilles carosseries ou de matériel d'emballage étant employés comme matières de départ, caractérisée par la combinaison des groupes technologiques suivants installés l'un derrière l'autre:
- un appareil d'amenée (1) où les masses contenant des pièces dures et les masses sans pièces dures sont, de préférence, introduites séparément,
- une installation à broyer (2), qui est composée d'un shredder destiné au broyage des matériaux contenant des pièces dures (2.1) et d'un autre shredder pour les matériaux sans pièces dures et sans métaux (2.2), où les matériaux sont à introduire séparément, autant que possible,
- une installation de dépoussiérage (3) pour le mélange de rognures broyées, avec un dépoussiéreur (4) destiné à l'aspiration de l'air d'échappement chargé de poussières qui est, dans le but de remettre les poussières débourbées en cycle de traitement de l'installation, couplé avec le dispositif de minéralisation (7) resp. avec le mélangeur (8),
- un doseur (5) auquel les rognures sortant de l'installation de dépoussiérage (3) sont amenées de préférence en chute libre et qui homogénise les rognures du matiériau sur la courroie de transport (5.4),
- une installation d'inertisation (6), composée de générateurs du flux de chaleur (6.1) avec un gradient thermique minimale de 20 K par mm de longueur de passsage devant et derrière une ligne caustique où la température de couleur mésurable atteint 600° C,
- une installation de minéralisation (7) dans laquelle les rognures inertisées (6.2) sont mises en contact avec avec la solution aqueuse du minéral (7.1) et avec d'autres minéraux, tels que p. e. la boue (7.2) sortant du dépoussiéreur (4) ou la boue de rebut,
- un mélangeur (8) servant à mélanger les rognures minéralisées avec les restes de la solution du minéral, avec le liant (8.1) et avec une part des boues et les eaux usées (8.2) sortant du dépoussiéreur (4).

10. Installation d'après revendication 8,
caractérisée comme suit: le doseur (5) est composé d'une écluse à roue cellulaire (5.1), d'un rouleau élargisseur (5.2), d'un rouleau détacheur (5.3) et d'une courroie transporteuse (5.4), sur laquelle se trouve le mélange des matériaux traité de cette manière resp. la chaîne des rognures (5.5) sortant du doseur (5), le rouleau élargisseur (5.2) et le rouleau détacheur (5.3) qui sont actionnés au sens opposé au mouvement de la courroie transporteuse (5.4).

11. Installation d'après revendication 8 ou 9,
caractérisée par un dosage de la masse à l'aide de la roue de décharge de l'écluse à roue cellulaire (5.1) en dépendance du nombre de tours,
par l'emploi d'une brosse cylindrique comme rouleau détacheur (5.3) et
par une courroie transporteuse (5.4) qui est construite sous forme de sangle, de tablier métallique ou transporteur à racloirs.

12. Installation d'après revendication 8,
caractérisée par un dispositif d'inertisation (6) qui se trouve dans une rangée avec les sources du rayonnement thermique (6.1) montées parallèlement à la ligne de transport, de préférence à angle droit à la direction de transport, et installées au-dessus de la chaîne des rognures (5.5) sortant du doseur (5) sur la courroie transporteuse (5.4), avec la possibilité d'ajouter aux générateurs du flux de chaleur (6.1) montés d'un côté au-dessus de la courroie transporteuse un deuxième dispositif d'inertisation (6.4) qui permet une irradiation répétée bilatérale, et qui est composée de générateurs du flux de chaleur (6.4) montés l'un en face de l'autre avec un entonnoir d'alimentation (6.3) au-dessus dont la distance est ajustée sur la fente entre les générateurs du flux de chaleur (6.4), les rognures à traiter passent le dispositif d'inertisation (6.4) de préférence en chute libre.

13. Installation d'après une des revendications 8 à 11,
caractérisée par l'emploi d'une vis transporteuse comme dispositif de minéralisation (7) et par le mélangeur (8) en qualité duquel peut servir un mélangeur à circulation forcée du type commercial.

14. Installation d'après une des revendications 8 à 12,
caractérisée par un dispositif de traitement postérieur (9) qui est placé en aval du mélangeur (8) pour les charges contenant des constituants biotoxiques et réalisé d'une façon analogue à celle de l'installation d'inertisation (6), la réalisation de ce dispositif de traitement postérieur (9) avec les éléments entonnoir d'alimentation (6.3) et générateurs du flux de chaleur (6.4) montés l'un en face de l'autre étant basée sur le principe de la chute libre.

15. Matériaux aux propriétés modifiées pour l'utilisation comme couches de construction qui bloquent la perméabilité aux gaz, fabricables en résultat du procédé d'après revendication 1,
caractérisés par une couche intermédiaire (16) gonflant qui retient l'humidité et bloque ainsi la perméabilité aux gaz, et qui est appliquée entre couches insensibles à la rupture de fragilité (15; 17) composées de rognures resp. de produits recyclés minéralisés et liés au ciment de l'industrie textile, de cuir et de cuir imité. Elle est réalisable comme masse pulverisée minérale à accumulation d'eau entre deux pans textiles élastiques et y fixée, dans ce cas-là, avec le matériau textile, sa couche porteuse étant située sur la couche inférieure (17) en matériaux minéralisés et liés au ciment.

16. Couche de construction qui bloque la perméabilité aux gaz d'après revendication 14,
caractérisée par une réalisation de la couche intennédiaire (16) sous forme d'une natte d'étanchéité et par une construction de la couche de recouvrement (15) là-dessus en panneaux préfabriqués d'un matériau aux propriétés modifiées selon l'invention ou de béton préparé en place de ce matériau conformément à la couche (17), le matériau aux propriétés modifiées perméable à l'eau pennettant une pennéabilité à l'eau de surface dans le but d'une humification de la couche intermédiaire à accumulation d'eau qui bloque la perméabilité aux gaz.

17. Couche de construction qui bloque la perméabilité aux gaz d'après revendication 14 ou 15,
caractérisée par un panneau d'étanchéité supplémentaire en matière artificielle (19) prévu pour recouvrir de haldes émettrices de radon, qui est à placer entre le matériau aux propriétés modifiées en béton fabriqué en place (17) et la couche à accumulation d'eau (16) et qui empêche l'entraînement de liquides transporteurs du gaz de radon dans la natte d'étanchéité.
